# EUROPÄISCHE PATENTSCHRIFT

(11) **EP 3 267 842 B1**
(45) Veröffentlichungstag und Bekanntmachung des Hinweises auf die Patenterteilung: **22.05.2019**
(21) Anmeldenummer: 16709466.3
(22) Anmeldetag: 11.03.2016
(51) Int. Cl.: F16H 57/02, A47C 19/02, F16H 25/20, F16H 57/03, A47C 20/04

(54) **ELEKTROMOTORISCHER DOPPELANTRIEB**
ELECTROMOTIVE DUAL DRIVE
ENTRAÎNEMENT DOUBLE À MOTEUR ÉLECTRIQUE

(30) Priorität: 13.03.2015 DE 202015101316 U
(43) Veröffentlichungstag der Anmeldung: 17.01.2018
(73) Patentinhaber: DewertOkin GmbH, 32278 Kirchlengern (DE)
(72) Erfinder: KLIMM, Hartmut, 32257 Bünde (DE); DÜCK, Heinrich, 32339 Espelkamp (DE); MÜLLER, Christian, 32369 Rahden (DE)
(74) Vertreter: Kleine, Hubertus
(86) Internationale Anmeldenummer: PCT/EP2016/055363
(87) Internationale Veröffentlichungsnummer: WO 2016/146547

(56) Entgegenhaltungen:
- EP-B1- 1 266 439
- DE-C1- 10 047 037
- DE-U1-202004 020 384

## Beschreibung

Die Erfindung betrifft einen elektromotorischen Doppelantrieb zur Verstellung von zwei verschiedenen Möbelteilen eines Möbels mit zwei Antriebseinheiten, von denen jede einen Antriebsmotor, ein Getriebe und einen auf ein Abtriebsglied wirkenden Spindelantrieb mit jeweils einer Spindel aufweist. Beide Antriebseinheiten sind in einem gemeinsamen Gehäuse in Längsrichtung des Gehäuses hintereinander liegend angeordnet. An beiden in Längsrichtung sich gegenüberliegenden Endabschnitten des Gehäuses sind Achsaufnahmen für jeweils eine Schwenkachse des Möbels ausgebildet, auf die jeweils ein Abtriebsglied wirkt.

Derartige elektromotorische Doppelantriebe werden beispielsweise eingesetzt, um das Kopfteil und das Fußteil eines Lattenrostes elektromotorisch verstellen zu können. Sie können auf einfache Weise am Möbel, beispielsweise dem genannten Lattenrost eines Bettes, montiert werden, indem jeweils eine Schwenkachse des Möbels in jeweils eine der Achsaufnahmen eingesetzt wird. Zu diesem Zweck sind die Achsaufnahmen üblicherweise mit Abdeckschiebern versehen, die entnommen werden können, um die Schwenkachse mit einem Schwenkhebel in die Achsaufnahme einlegen zu können. Nach Wiederaufsetzen der Abdeckschieber ist der gesamte Doppelantrieb an den Achsen festgelegt. Die Antriebseinheiten wirken unabhängig voneinander über ihren Spindelantrieb und das Abtriebsglied auf den jeweiligen Schwenkhebel zur Verstellung der Möbelteile.

Ein derartiger Doppelantrieb ist beispielsweise aus der Druckschrift EP 1 266 439 B1 bekannt. Bei diesem Doppelantrieb ist ein längliches gemeinsames Gehäuse für den Doppelantrieb vorgesehen, wobei beide Antriebseinheiten im Wesentlichen spiegelbildlich bezüglich einer Spiegelebene aufgebaut, die senkrecht zur Längserstreckungsrichtung mittig durch das Gehäuse des Doppelantriebs verläuft. Die Antriebsmotoren beider Antriebseinheiten liegen benachbart zueinander in einem mittleren Abschnitt des Gehäuses, wobei die Antriebsspindeln zueinander fluchtend nach außen weisen. Im jeweiligen Endabschnitt des Doppelantriebs wirken als Druckplatten ausgebildete Abtriebsglieder auf Schwenkhebel eingesetzter Schwenkachsen.

In Längsrichtung ist das Gehäuse des Doppelantriebs der Druckschrift EP 1 266 439 B1 durch diese Anordnung der Antriebseinheiten in mehrere Abschnitte unterteilt. Neben den außen liegenden Endabschnitten, durch die die Schwenkachsen verlaufen und in denen die Schwenkhebel liegen, lassen sich drei Abschnitte unterteilen: Ein zwischen den Motoren bzw. ihnen zugeordneten Reduziergetrieben liegender Abschnitt, sowie jeweils ein im Bereich der Spindeln liegender Abschnitt. Jeder dieser Abschnitte bietet die Möglichkeit, elektrische und/oder elektronische Komponenten des elektromotorischen Antriebs im Gehäuse unterzubringen.

Bei einer solchen Aufbau bekannter Doppelantriebe wird üblicherweise zwischen den Motoren eine Steuerplatine des elektromotorischen Antriebs angeordnet und im Bereich der Spindeln ist jeweils eine weitere Platine vorgesehen, auf der Endlagenschalter angeordnet sind, die von dem Abtriebsglied betätigt werden. Falls ein integriertes Netzteil vorgesehen ist, findet der Transformator eines solchen Netzteils bevorzugt ebenfalls im Bereich zwischen den Motoren Platz. Nachteilig an der Unterteilung des zur Verfügung stehenden Platzes in mehrere Abschnitte ist der erhöhte Fertigungsaufwand, der sich aus der Notwendigkeit ergibt, mehrere Platinen im Gehäuse festlegen zu müssen und untereinander verkabeln zu müssen.

Zudem ist der beschriebene Aufbau nachteilig im Hinblick auf den Platzbedarf des Doppelantriebs beim Versenden. In seitlicher Richtung, das heißt in Richtung der Schwenkachsen, ist das Gehäuse üblicherweise schmal ausgebildet. Die Antriebsmotoren weisen eine Drehachse auf, die parallel zu den Schwenkachsen ausgerichtet ist, wobei die Motoren seitlich über die sonstige Breite des Gehäuses hinausragen. Am Gehäuse sind im Bereich der Motoren Motorabdeckungen (Motordome) angeordnet, um die abstehenden Motoren aufzunehmen bzw. abzudecken. Beide Motoren weisen zur gleichen Seite, um die seitliche Ausladung des Gehäuses nicht noch weiter zu vergrößern. Wenn die Doppelantriebe beim Versenden auf gleicher Höhe nebeneinander liegen, benötigen sie eine Stapelbreite, die ihrer Breite im Bereich der Motoren entspricht. Werden die Motoren so gedreht, dass jeweils zwei Doppelantriebe mit ihren Motoren aufeinander zu weisend orientiert sind, müssen sie in ihrer Längsrichtung verschoben werden, um bezüglich ihrer Breite platzsparender angeordnet werden können. Diese im Hinblick auf die Breite effektivere Anordnung führt dann zu einem erhöhten Platzbedarf in Längsrichtung der Antriebe. Die in Längsrichtung versetzte Anordnung zweier Antriebe ist auch im Hinblick auf die Größe der Verpackung in Längsrichtung unvorteilhaft, da in Längsrichtung die Doppelantriebe bereits eine unhandliche Länge aufweisen. Weiterhin ist es erstrebenswert, genormte Verpackungsgrößen zu verwenden, beispielsweise auf der Basis von Europaletten. Eine Anordnung mit signifikantem Versatz in Längsrichtung kann je nach Länge der Doppelantriebe der Verwendung von Europaletten entgegen stehen.

Aus der Druckschrift DE 20 2013 101 521 U1 ist ein elektromotorischer Antrieb bekannt, bei dem im Gehäuse Mulden ausgebildet sind, sodass mitgelieferte Zusatzkomponenten, wie beispielsweise eine Fernbedienung für den elektromotorischen Antrieb, in dieser Mulde angeordnet werden können, ohne dass sie seitlich über die Abdeckung der Motoren hinaus ragen. Auf diese Weise kann beim Verpacken und Versenden des Doppelantriebs der bedingt durch die hervorstehenden Motorabdeckungen frei bleibende Platz zwischen zwei Doppelantrieben sinnvoll genutzt werden. Das grundsätzliche Problem, dass die Breite beim Verpacken im Wesentlichen durch die Breite des Gehäuses im Bereich der Motoren bestimmt wird, bleibt jedoch weiter bestehen.

Es ist daher eine Aufgabe der vorliegenden Erfindung, einen Doppelantrieb der eingangs genannten Art anzugeben, bei dem zum einen der innerhalb des Gehäuses für elektrische und /oder elektronische Komponenten zur Verfügung stehende Platz möglichst effektiv genutzt werden kann und der möglichst platzsparend zusammen mit anderen gleichartigen Antrieben verpackt werden kann.

Diese Aufgabe wird durch einen elektromotorischen Doppelantrieb mit den Merkmalen des unabhängigen Anspruchs gelöst. Vorteilhafte Ausgestaltungen und Weiterbildungen sind in den abhängigen Ansprüchen angegeben.

Ein elektromotorischer Doppelantrieb der eingangs genannten Art zeichnet sich dadurch aus, dass die Spindeln und/oder die Abtriebsglieder der beiden Antriebseinheiten unterschiedlich lang ausgebildet sind so dass die Antriebsmotoren unterschiedlich weit von der ihnen zugeordneten Achsaufnahme für die jeweilige Schwenkachse beabstandet sind.

Bei aus dem Stand der Technik bekannten Doppelantrieben sind beide Antriebseinheiten mit möglichst kurzer Spindel ausgebildet, deren Länge vergleichbar mit der kürzeren der beiden Spindel bei dem erfindungsgemäßen Doppelantrieb ist. Dadurch gliedert sich, abgesehen von den Endbereichen des Doppelantriebs, in dem die Schwenkachsen aufgenommen sind, der zur Verfügung stehende Innenraum des Gehäuses in drei Bauräume, jeweils einen oberhalb der Spindeln und einen dritten Bauraum zwischen den beiden Antriebsmotoren. Entsprechend ist der im Gehäuse zur Verfügung stehende Bauraum gemäß dem Stand der Technik in etwa drei gleichgroße Abschnitte unterteilt, wo hingegen erfindungsgemäß der Bauraum zwischen den Antriebsmotoren verkleinert wird und zumindest einer der Abschnitte im Bereich einer der Spindeln dadurch vergrößert wird. Bevorzugt können beide Antriebseinheiten mit ihren Antriebsmotoren benachbart und mit geringem Abstand zueinander angeordnet sein, wodurch der zwischen den Motoren liegende Bauraum zugunsten eines umso größeren Bauraums im Bereich der verlängerten Spindel wegfällt. Auch wenn sich bei gleicher Länge des Möbelantriebs der insgesamt verfügbare Bauraum nicht vergrößert, so ist er doch weniger untergliedert, was eine größere Gestaltungsfreiheit bei den in diesen Bauräumen anzuordnenden elektrischen und elektronischen Komponenten bietet.

Dabei ist im Rahmen der Anmeldung unter der Spindel das Element zu verstehen, das von dem Getriebe ausgehend die Drehbewegung des Antriebsmotors in eine Linearbewegung einer Spindelmutter überträgt. Zur Spindel zählt neben einem Gewindeabschnitt auch ein zwischen dem Getriebe und dem Gewindeabschnitt liegender, die Drehbewegung übertragender Abschnitt. In diesem Sinne ist auch ein zwischen dem Getriebe und einem Gewindeabschnitt angeordnetes Distanzelement o.ä. als Teil der Spindel anzusehen. In einer Ausführung des Distanzstückes kann dieses im Wesentlichen Drehmomente übertragen, wenn es mit der dem Getrieberad zugewandten Seite eine formschlüssige Drehmitnahme umfasst und kann Winkelfehler zwischen Getrieberad und dem Gewindeabschnitt der Spindel ausgleichen. Die Getrieberäder sind bevorzugt durch Schneckenräder gebildet und weisen einen Abschnitt für ein Lager auf. Auch ein sich in Achsrichtung über den eigentlichen Getriebebereich hinaus erstreckendes Schneckenrad eines Schneckengetriebes ist als Teil der Spindel anzusehen. Die Länge der Spindel bestimmt somit den maximal möglichen Abstand zwischen dem Getriebe und dem Abtriebsglied, unabhängig davon, ob sie einstückig als Achse mit Gewindeabschnitt ausgebildet ist, oder einen Schneckenradabschnitt und/oder ein Distanzelement und/oder einen Nicht-Gewindeabschnitt und den Gewindeabschnitt aufweist.

Unter einem geringen Abstand der Antriebseinheiten ist insbesondere ein solcher Abstand zu verstehen, bei dem die Antriebseinheiten so nah zueinander positioniert sind, dass keine oder nur sehr schmale Komponenten zwischen ihnen angeordnet werden und angeordnet werden können. Sehr schmal Komponenten können beispielsweise Versteifungsrippen des Gehäuses sein.

Ein weiterer Vorteil der Verringerung des Abstands der Antriebsmotoren ist, dass die Antriebsmotoren nicht mehr symmetrisch zur Mitte der Längsseite des Gehäuses angeordnet sind, sondern außermittig. Entsprechend sind auch Abdeckungen der Antriebsmotoren, die über die Gehäuseseitenfläche hervorstehen, außermittig angeordnet. Die außermittige Anordnung erlaubt es, zwei Möbelantriebe mit jeweils aufeinander zuweisenden Antriebsmotoren, innerhalb einer Verpackungseinheit zu positionieren, wobei nur eine geringe oder je nach Geometrie gar keine Verschiebung der Möbelantriebe zueinander in Längsrichtung erfolgen muss. So kann der durch die hervorstehenden Motorabdeckungen entstehende Leerraum in einer Verpackungseinheit minimiert werden.

Es wird angemerkt, dass die Verringerung des Abstands der Antriebsmotoren bei gleicher Baulänge des Doppelantriebs durch unterschiedliche Längen der Spindeln erreicht werden kann. Dem gleichwertig ist eine Ausgestaltung, bei der die Spindeln beider Antriebseinheiten gleich lang sind, aber die Abtriebsglieder, z.B. Druckschieber, unterschiedlich lang sind. Auch Kombinationen der genannten Ausführungen sind denkbar.

Vorteilhaft kann bei zusammengerückten Antriebsmotoren ein gemeinsamer Motordom am Gehäuse ausgebildet sein, der über eine Seitenfläche des Gehäuses hinausragende Abschnitte beider Antriebsmotoren abdeckt. Weiter bevorzugt können Antriebswellen der Antriebsmotoren gegenüber der Seitenfläche des Gehäuses schräg verlaufen, um einen Überstand der Motoren über die Seitenfläche gegenüber einer Anordnung, bei der die Antriebswellen senkrecht zur Seitenfläche stehen, zu verringern.

In einer weiteren vorteilhaften Ausgestaltung des elektromotorischen Doppelantriebs ist in dem größeren Bauraum im Bereich der verlängerten Spindel bzw. des verlängerten Abtriebsglieds eine Steuerplatine angeordnet. Dadurch kann besonders vorteilhaft eine einzige Steuerplatine eingesetzt werden, auf der neben einer Steuervorrichtung für die Antriebsmotoren optional auch ein Netzteil angeordnet werden kann, wodurch der Verdrahtungsaufwand beim Zusammenbau verringert wird. Besonders bevorzugt sind auf der Steuerplatine zudem Endlagenschalter zur Abschaltung der Antriebsmotoren bei Annäherung der Abtriebsglieder an Grenzen ihres Verschiebewegs angeordnet, wobei die Abtriebsglieder über Schleppstangen mit den Endschaltern gekoppelt sind. Auf diese Weise kann der Verdrahtungsaufwand weiter verringert werden und es kann auf separate Platinen für die Endlagenschalter verzichtet werden.

Zusätzlich können weitere Baugruppen, beispielsweise ein Drahtlosempfänger, Speicherbausteine für z.B. Betriebsparameter oder zu Protokollzwecken oder Rechenbausteine zusätzlich auf der Steuerplatine angeordnet sein.

In einer weiteren vorteilhaften Ausgestaltung des elektromotorischen Doppelantriebs sind die Abtriebsglieder zwischen einer vollständig eingefahrenen und einer vollständig ausgefahrenen Stellung linear verschiebbar, wobei bei Annäherung an die vollständig eingefahrene bzw. die vollständig ausgefahrene Stellung die zugeordnete Schleppstange aus einer Neutralstellung heraus in eine oder eine entgegengesetzte Richtung auslenken. Die lineare Schiebebewegung der Abtriebsglieder, die beispielsweise als Druckschieber ausgebildet sind, die mit einem Druckkopf auf die Schwenkhebel der Schwenkachsen wirken, kann vorteilhaft auf die Schleppstangen übertragen werden, indem die Schleppstangen nicht dauerhaft mit den Abtriebsgliedern mitbewegt werden, sondern nur bei Annäherung an das jeweilige Ende des Verschiebewegs. Eine solche Kopplung kann beispielsweise mechanisch einfach dadurch erreicht werden, dass die Schleppstangen jeweils einen Mitnehmer aufweisen, der von Anschlägen an den Abtriebsgliedern mitbewegt wird. Vorteilhaft ist dann jeder Schleppstange eine Rückstellfeder zugeordnet, die sie bei Auslenkung in jeder der möglichen Richtungen in die Neutralstellung zurückbewegt. In einer kostengünstigen und materialsparenden Ausführung ist die Rückstellfeder eine w-förmige Feder mit zwei Federarmen, die in einem mittleren Bereich am Gehäuse festgelegt ist. Die Federarme umgreifen einen Teil der Schleppstange, z.B. einen entsprechend geformten Nocken, wobei je nach Richtung der Auslenkung der eine oder der andere Federarm den Nocken zurück in Richtung der Neutralstellung schiebt.

In einer weiteren vorteilhaften Ausgestaltung des elektromotorischen Doppelantriebs weist jede der Schleppstangen Schaltnocken auf, um die Endlagenschalter bei Auslenkung zu betätigen. Dabei sind die Schaltnocken bevorzugt auf einer Seite der Steuerplatine angeordnet und die sonstigen Abschnitte der Schleppstangen auf der gegenüberliegenden Seite der Steuerplatine. In der Steuerplatine ist eine schlitzartige Ausnehmung vorgesehen, in der die Schleppstangen geführt sind und durch die die Bewegung der Steuerstangen von der einen Seite der Steuerplatine auf die Schaltnocken auf der anderen Seite der Steuerplatine übertragen wird. Die Steuerplatine übernimmt so auch noch zusätzlich die Funktion der Führung der Schleppstangen. Darüber hinaus kann zusätzlich eine weitere Führung der Schleppstangen innerhalb des Gehäuses, bevorzugt durch Elemente des Gehäuses, z.B. durch Versteifungsrippen, vorgesehen sein.

Die Erfindung wird nachfolgend anhand eines Ausführungsbeispiels mithilfe von Figuren näher erläutert. Die Figuren zeigen:
- Figur 1, 2: jeweils eine isometrische Ansicht eines Möbelantriebs aus zwei unterschiedlichen Blickrichtungen;
- Figur 3: eine isometrische Ansicht des Möbelantriebs der Figuren 1 und 2 mit geöffnetem Gehäuse;
- Figur 4: eine Seitenansicht des Möbelantriebs der Figuren 1 und 2 mit geöffnetem Gehäuse;
- Figur 5: eine weitere isometrische Ansicht des Möbelantriebs der Figuren 1 und 2 mit geöffnetem Gehäuse;
- Figuren 6-8: jeweils eine isometrische Detailansicht des Möbelantriebs;
- Figur 9: eine isometrische Darstellung eines Druckschiebers und eines Druckkopfes des Möbelantriebs der Figuren 1 bis 8;
- Figur 10: drei Teilbilder mit jeweils einer Draufsicht auf einen Teil des Druckschiebers mit Druckkopf in verschiedenen Relativpositionen zueinander; und
- Figur 11: eine Draufsicht auf Anzahl von Möbelantrieben in einer Verpackungseinheit.

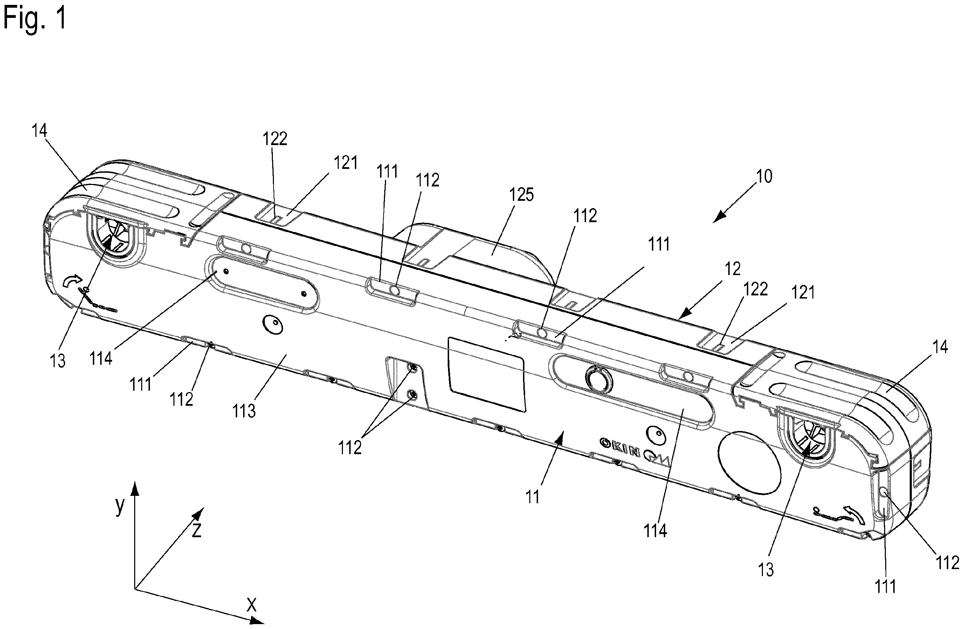

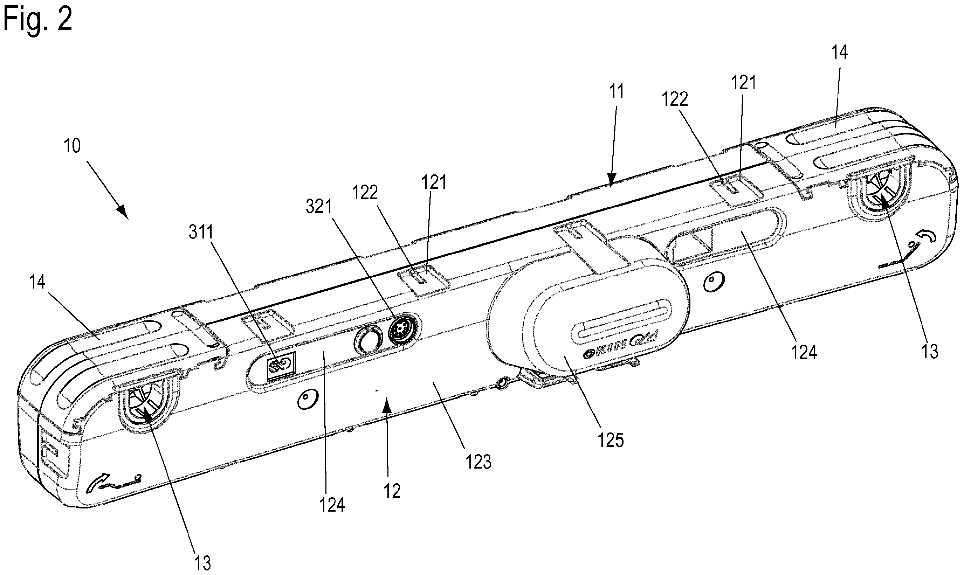

In den Figuren 1 und 2 ist ein Ausführungsbeispiel eines anmeldungsgemäßen Möbelantriebs in jeweils einer isometrischen Gesamtansicht aus zwei verschiedenen Blickrichtungen dargestellt. In diesen wie in allen folgenden Figuren zeigen gleiche Bezugszeichen jeweils gleiche oder gleichwirkende Elemente.

Der Möbelantrieb weist ein Gehäuse 10 auf, das bezüglich seiner Grundform im Wesentlichen quaderförmig ist mit einer Längserstreckung in einer ersten Richtung, nachfolgend als x-Richtung bezeichnet, die die Erstreckung in den dazu senkrechten y- bzw. z-Richtungen deutlich übersteigt.

Das Gehäuse 10 ist aus zwei Gehäusehalbschalen aufgebaut, einer ersten Gehäusehalbschale 11 und einer zweiten Gehäusehalbschale 12, wobei eine Trennlinie zwischen den beiden Gehäusehalbschalen 11, 12 in der xy-Ebene verläuft. Bevorzugt sind die Gehäusehalbschale 11, 12 aus Kunststoff in einem Spritzgussverfahren hergestellt.

Das in diesem Ausführungsbeispiel dargestellte Gehäuse 10 ist zur Verbindung seiner Gehäusehalbschalen 11,12 verschraubt. Zu diesem Zweck sind in Klemmmulden 111 bzw. 121 angeordnete Schraublöcher 112 bei der ersten Gehäusehalbschale 11 bzw. Schraubdome 122 bei der zweiten Gehäusehalbschale 12 vorgesehen. Alternativ und/oder zusätzlich können in die Klemmmulden 111 bzw. 121 die Trennungslinie zwischen den Gehäusehalbschalen 11, 12 übergreifende und mit diesen verrastende Verbindungsklemmen aufgeklipst werden. Zusätzlich zu den in den Klemmmulden 111, 121 angeordneten Schraubverbindungen können weitere Schraublöcher 112 vorgesehen sein, wie beispielsweise in Figur 1 im unteren mittleren Bereich der ersten Gehäusehalbschale 11 zu erkennen ist.

An Seitenflächen 113 bzw. 123 des Gehäuses 10 sind leicht vertiefte Anschlussmulden 114 bzw. 124 angeordnet, in denen Anschlüsse und/oder Anzeige- und Bedienelemente für den elektromotorischen Möbelantrieb positioniert sind. Auch bei leicht gewölbten Seitenflächen 113, 123 wird innerhalb der Mulden eine ebene Fläche bereitgestellt, die die Anordnung von Anschlüssen und Bedienelementen vereinfacht. Die Anschlussmulden 114, 124 schützen zudem die Anschlüsse und Anzeige- und Bedienelemente beim Transport oder der Montage.

Wie insbesondere in Figur 2 gut ersichtlich ist, steht an der zweiten Gehäusehalbschale 12 ein Motordom 125 über die Seitenfläche 123 hervor. Der Motordom 125 deckt seitlich über die Seitenfläche 123 hinausragende Motorgehäuse ab, wobei bei dem dargestellten Ausführungsbeispiel ein einzelner Motordom 125 vorgesehen ist, der die Gehäuse von zwei nebeneinander angeordneten Antriebsmotoren übergreift.

Neben einer Verschraubung bzw. Verklammerung des Gehäuses 10 sind alternativ weitere Verbindungsmethoden möglich, insbesondere ein Verschweißen, Vernieten oder Kleben der Gehäusehalbschalen 11, 12. Ein Verschweißen von Gehäusehalbschalen 11, 12, die aus thermoplastischen Kunststoff gefertigt sind, kann in einem Ultraschallprozess erfolgen. Besonders vorteilhaft ist ein Schweißprozess, bei dem Stoßflächen der Gehäusehalbschalen 11, 12 vor dem Zusammenfügen erwärmt werden, bis das Kunststoffmaterial zumindest in einer oberflächennahen Schicht anschmilzt. In einem nächsten Schritt werden die Gehäusehalbschalen unter Krafteinwirkung passgenau zusammengefügt, bis der Kunststoff wieder fest geworden ist und sich mit dem Kunststoff der jeweils anderen Gehäusehalbschale 11, 12 verbunden hat. Zur passgenauen Positionierung der Gehäusehalbschale 11, 12 untereinander können an den Gehäusehalbschale 11, 12 ineinander- oder aneinandergreifende Stege oder Zapfen vorgesehen sein.

Zum Erwärmen der Kunststoffoberflächen kann Strahlungswärme durch Heizelemente, z.B. Infrarotstrahler zugeführt werden. Alternativ und bevorzugt kann ein sogenanntes Heißgas- bzw. Heißluftschweißverfahren eingesetzt werden, bei dem ein heißes Gas über ein Düsenverteilsystem genau lokalisiert auf die Verbindungsstellen gerichtet wird. Ein Vorteil des Schweißverfahrens durch Vorerwärmung der Verbindungsstellen gegenüber einem Ultraschallschweißen ist, dass zielgerichtet auch im Inneren des Gehäuses liegende Verbindungen zwischen den Gehäusehalbschalen 11, 12 ausgebildet werden können. So kann eine Verbindung im Bereich von Kraft aufnehmenden bzw. Kraft übertragenden Gehäuseabschnitten im Gehäuseinneren erfolgen. Solche Gehäuseabschnitte sind insbesondere im Bereich von Getrieben und/oder der Achsaufnahme 13 vorgesehen. Sie können auch so ausgebildet sein, dass sie eine Zentrierung bzw. Positionierung der Gehäusehalbschale 11, 12 untereinander herbeiführen..

Eine weitere vorteilhafte Verbindungsart ist Heißnieten. Bei diesem für Kunststoff-Gehäusehalbschalen geeigneten Verfahren sind an einer der Gehäusehalbschalen bolzenförmige Nietelemente angeordnet, die korrespondierende Durchbrüche bzw. Öffnungen der anderen Gehäusehalbschalen beim Zusammensetzten des Gehäuses durchdringen. Danach wird im sogenannten Heißgasnietverfahren der Kopf des Nietelements erwärmt und mit einem kalten Stempel zu einem Nietkopf verpresst. Ein Vorteil hierbei ist, dass die Geometrie des Nietelements frei gewählt werden kann. Neben den genannten Bolzen können auch größere Elemente in Zungen- bzw. Laschenform verwendet werden, die eine großflächige Kraftübertragung zwischen den beiden Gehäusehalbschalen ermöglichen.

In den Endbereichen (in Längserstreckungsrichtung gesehen) des Gehäuses 10 sind Achsaufnahmen 13 angeordnet, in denen jeweils eine in z-Richtung ausgerichtete Schwenkachse eines Möbels gelagert wird. Zum Einsetzten der Schwenkachse in die Achsaufnahme 13 ist jeweils ein abnehmbarer Schieber 14 vorgesehen, der die Achsaufnahme 13 übergreift. Der Schieber 14 wird in entsprechend geformte und hinterschnittene Nuten der Gehäusehalbschalen 11, 12 geschoben. Bevorzugt ist ein Einschieben in z-Richtung vorgesehen, wobei zusätzlich eine Verrastung zwischen den Schiebern 14 und den Gehäusehalbschalen 11, 12 vorgesehen sein kann.

Die in die Achsaufnahmen 13 eingesetzten Schwenkwellen weisen einen dann innerhalb des Gehäuses 10 liegenden Schwenkhebel auf, der vom dargestellten Möbelantrieb mit Kraft beaufschlagt wird, wodurch die Schwenkwellen zur Verstellung von Möbelteilen gedreht werden. Eine typische Anwendung findet der dargestellte Möbelantrieb in Zusammenhang mit einem Lattenrost eines Bettes als Möbel. Die beiden Schwenkwellen sind mit einem Kopf- bzw. einem Fußteil des Lattenrosts verbunden, die durch Verschwenken der Schwenkwellen entsprechend angehoben oder abgesenkt werden können. Der Möbelantrieb betätigt die Schwenkwellen und ist gleichzeitig an ihnen festgelegt. Eine darüber hinausgehende Bestfestigung des Möbelantriebs am Möbel ist nicht erforderlich. Im Betrieb ist der Möbelantrieb im Wesentlichen so ausgerichtet, dass die eingezeichnete xz-Ebene horizontal und die xy-Ebene vertikal verläuft.

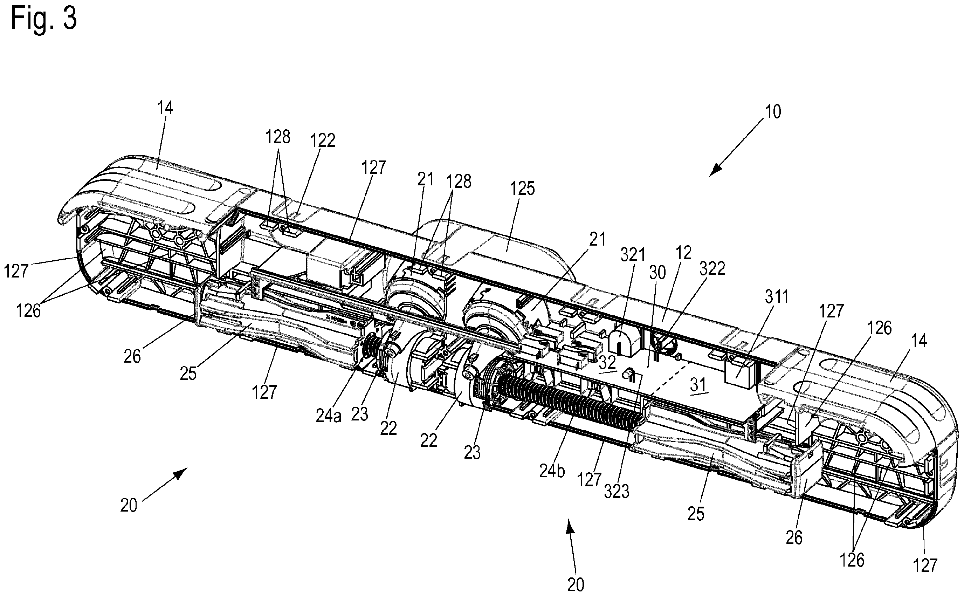

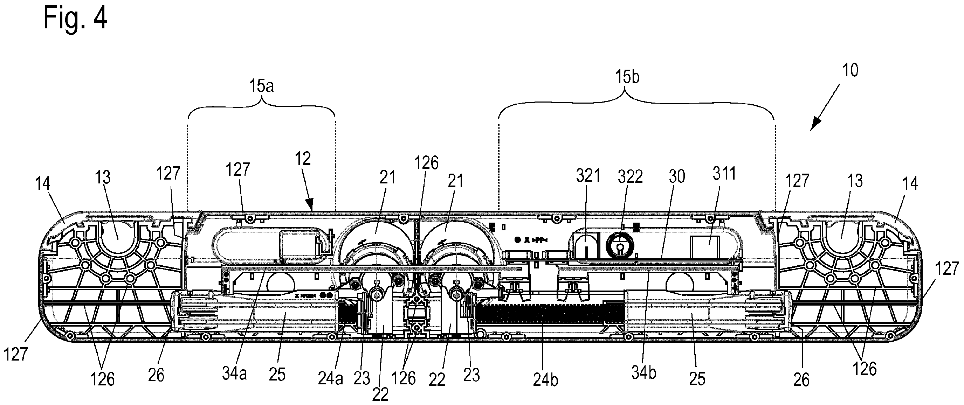

In den Figuren 3 und 4 ist jeweils eine Gesamtansicht des Möbelantriebs der Figuren 1 und 2 dargestellt, wobei die erste Gehäusehalbschale 11 (vgl. Figuren 1, 2) abgenommen ist, um Einblick in den inneren Aufbau des Möbelantriebs zu gewähren. Die Figur 3 ist eine isometrische Schrägansicht aus dem Blickwinkel, der auch in Figur 1 eingenommen ist. Die Figur 4 zeigt den Möbelantrieb in einer Seitenansicht auf die xy-Ebene.

Die aufeinanderliegenden äußeren Kanten der Gehäusehalbschalen 11, 12 bilden Stoßflächen 127, die so profiliert sein können, dass eine Dichtung der beiden Gehäusehalbschalen 11, 12 zueinander erfolgt. Dieses ist beispielsweise durch Ausbilden von Nut und Feder an den Stoßflächen 127 möglich. Zusätzlich können die Stoßflächen 127 der beiden Gehäusehalbschalen 11, 12 miteinander verklebt sein oder es kann eine elastische Dichtung zwischengelegt sein. Falls eine Verbindung der beiden Gehäusehalbschalen 11, 12 durch ein Schweißverfahren, beispielsweise das zuvor genannte Heißgasschweißen erfolgt, kann eine Profilierung, beispielsweise eine Fase vorgesehen sein, durch die verhindert wird, dass eine Schweißnaht nach außen hervorsteht, bzw. durch die ein Überstand vermindert wird.

Insbesondere im Bereich der Achsaufnahmen 13 sind Versteifungsrippen 126 ausgebildet, die auf den Rand der Achsaufnahme 13 von den Schwenkachsen aufgebrachte Kräfte aufnehmen und im Gehäuse verteilen. Unmittelbar um die Achsaufnahme 13 herum sind die Versteifungsrippen 126 flach gehalten, da sich in diesem Bereich der Schwenkhebel der Schwenkachsen bewegt. Wo möglich, beispielsweise angrenzend an die Endbereiche zur Trennung der Endbereiche und einem mittleren Abschnitt des Gehäuses 10 sind Versteifungsrippen 126 angeordnet, die so hoch ausgebildet sind, dass sie an entsprechender Stelle in der hier nicht dargestellten ersten Gehäusehalbschale 11 vorgesehene Versteifungsrippen berühren, so dass auch hier Stoßflächen 127 zwischen den beiden Versteifungsrippen ausgebildet sind. Insbesondere wenn für beide Gehäusehalbschalen 11, 12 ein Fügeverfahren verwendet wird, bei dem eine Verbindung auch der inneren Stoßflächen 127 möglich ist, beispielsweise bei dem zuvor erwähnten Heißgasschweißen, kann so eine erhöhte Steifigkeit des Gehäuses 10 erzielt werden.

Zusätzlich sind im Bereich der Schraubdome 122 Zentrierlaschen 128 angeordnet, die in entsprechende Vertiefungen der ersten Gehäusehalbschale 11 hinein ragen. Wenn ein Schweißverfahren als Fügeverfahren verwendet wird, kann an diesen Stellen zusätzlich eine Verschweißung der Gehäusehalbschalen 11, 12 erfolgen, wodurch die Größe der Verwindungsfläche 11, 12 weiter erhöht wird.

Im Gehäuse 10 sind zwei Antriebseinheiten 20 angeordnet, die jeweils einen elektrischen Antriebsmotor 21 aufweisen, der über jeweils ein Getriebe 22 auf eine Spindel 24a bzw. 24b wirkt. Optional ist angrenzend an das Getriebe 22 eine Bremse 23 für die Spindel 24a, b angeordnet, vorliegend jeweils eine Schlingfederbremse. Im Gehäuse des Getriebes 22 ist zudem ein Lager, bevorzugt ein Wälzlager für die Spindel 24a, b angeordnet.

Die Getriebe 22 sind vorliegend als Schneckengetriebe ausgebildet. Eine Drehung der Antriebswelle des Antriebsmotors 21 wird über eine auf der Antriebswelle angeordnete Schnecke auf ein bevorzugt schräg verzahntes Zahnrad des Getriebes 22 übertragen. Das genannte Zahnrad ist drehfest mit der jeweiligen Spindel 24a, b verbunden, so dass diese mit untersetzter Drehzahl durch den Antriebsmotor 21 rotiert werden kann. Auf das dem Getriebe 22 jeweils gegenüberliegenden freien Ende der Spindel 24a, b ist ein Druckschieber 25 aufgesetzt, in den die Spindel 24a, b einfährt. Die Druckschieber 25 sind jeweils in x-Richtung verschiebbar im Gehäuse 10 gleitgelagert, wobei durch die Lagerung eine Verdrehung der Druckschieber 25 verhindert ist.

Im Inneren der Druckschieber 25 ist eine Spindelmutter drehfest angeordnet, die mit der Spindel 24a, b zusammenwirkt und eine Rotation der Spindel 24a, b in eine Verschiebebewegung des entsprechenden Schiebers 25 umsetzt. An dem Ende der Spindel 24a, b, das dem zugeordneten Getriebe 22 gegenüberliegt, ist auf den Druckschieber 25 ein Druckkopf 26 aufgesetzt, an dem der eingesetzte Schwenkhebel anliegt und der Kraft auf diesen Schwenkhebel überträgt, um die Schwenkachsen zu verschwenken.

Bei beiden Antriebseinheiten 20 ist ein bestimmter Verschiebeweg für die Druckschieber 25 vorgesehen. In den Figuren 3 und 4 ist jeweils eine vollständig oder annähernd vollständig eingefahrene Position des Druckschiebers 25 dargestellt, bei der dieser jeweils zumindest annähernd vollständig möglich zur Mitte des Gehäuses 10 (in Längsrichtung x gesehen) hin eingefahren ist.

Die beiden Antriebseinheiten 20 unterscheiden sich in der Länge ihrer Spindeln 24a bzw. 24b. Die Länge der Spindel 24a ist dabei so gewählt, dass der geforderte Verschiebeweg vom Druckschieber 25 erzielt wird und gleichzeitig Antriebsmotor 21 und Getriebe 22 möglichst nah an der entsprechenden Achsaufnahme 13 positioniert sind.

Die zweite Antriebseinheit 20 weist jedoch eine deutlich längere Spindel 24b auf, wobei die Länge der Spindel 24b bei gegebenem Abstand der Achsaufnahmen 13 so gewählt ist, dass die Antriebsmotoren 21 bzw. Getriebe 22 beider Antriebseinheiten 20 im Wesentlichen unmittelbar benachbart zueinander in Gehäuse 10 angeordnet sind. Vorliegend ist beispielsweise lediglich eine Versteifungsrippe 126 zwischen den beiden Antriebsmotoren 21 angeordnet. Zwischen den Getrieben 22 sind mehrere Versteifungsrippen 126 in Art eines Fachwerkverbunds angeordnet.

Die unterschiedliche Länge der Spindel 24a, b führt zu einer Aufteilung des im Gehäuse 10 verfügbaren Platzes, der sich vorteilhaft von bekannten Strukturierungen des Innenraums des Gehäuses eines Doppelantriebs unterscheidet. Abgesehen von den Endbereichen, in denen die Achsaufnahmen 13 angeordnet sind, unterteilt sich vorliegend der Innenraum des Gehäuses 10 in einen ersten Bauraum 15a, der oberhalb der Spindel 24a liegt, und einen zweiten, größeren Bauraum 15b oberhalb der Spindel 24b.

Bei aus dem Stand der Technik bekannten Doppelantrieben sind beide Antriebseinheiten mit möglichst kurzer Spindel ausgebildet, deren Länge vergleichbar mit der der Spindel 24a ist. Dadurch gliedert sich - wieder abgesehen von den Endbereichen - der zur Verfügung stehende Innenraum des Gehäuses in drei Bauräume, jeweils einen oberhalb der Spindeln und einen dritten Bauraum zwischen den beiden Antriebsmotoren. Entsprechend ist der im Gehäuse zur Verfügung stehende Bauraum gemäß dem Stand der Technik in etwa drei gleichgroße Abschnitte unterteilt, wo hingegen er vorliegend anmeldungsgemäß in nur zwei Abschnitte unterteilt ist, von denen einer, der Bauraum 15a, eine vergleichbare Größe wie die Bauräume aus dem Stand der Technik aufweist, der andere (Bauraum 15b) dagegen in etwa doppelt so groß ist. Auch wenn sich bei gleicher Länge des Möbelantriebs der insgesamt verfügbare Bauraum nicht vergrößert, so ist er doch weniger untergliedert, was eine größere Gestaltungsfreiheit bei den in diesen Bauräumen anzuordnenden elektrischen und elektronischen Komponenten bietet.

Es wird angemerkt, dass bei dem dargestellten Ausführungsbeispiel die außermittige Anordnung der Antriebsmotoren 21 durch unterschiedliche Länge der Spindeln 34a bzw. 34b erreicht wird. Dem gleichwertig ist eine Ausgestaltung, bei der die Spindeln beider Antriebseinheiten gleich lang sind, aber die Abtriebsglieder, z.B. die Druckschieber, unterschiedlich lang sind. Auch Kombinationen beider Ausführungen sind denkbar.

Bei dem dargestellten Ausführungsbeispiel ist in dem größeren der beiden entstandenen Bauräume 15b einer Steuerplatine 30 angeordnet. Die Steuerplatine 30 weist zwei Bereiche auf, die in der Figur 3 schematisch durch eine gestrichelte Linie voneinander getrennt sind. In dem in der Figur 3 rechts dargestellten Teil der Steuerplatine 30 ist ein Netzteil 31 angeordnet, wohin gegen sich in dem in der Figur links dargestellten Bereich eine Steuervorrichtung 32 befindet. Das Netzteil 31 weist einen Netzanschluss 311 auf, in den von außen ein Netzkabel eingesteckt werden kann. Das Netzteil 31, dessen elektronische Bauteile auf der Steuerplatine 30 aus Gründen der Übersichtlichkeit nicht wiedergegeben sind, ist bevorzugt ein Schaltnetzteil mit einem Hochfrequenzübertrager, das gegenüber einem konventionellen Niederfrequenztransformator einen geringeren Platzbedarf hat, weniger Gewicht aufweist und insbesondere im Leerlauf energieeffizienter ist. An einem Ausgang des Netzteiles 31 steht eine Niederspannung, bevorzugt eine Gleichspannung im Bereich von 20-30V (Volt), beispielsweise nominell 24V bereit, mit der die Steuervorrichtung 32 und die Antriebsmotoren 21 versorgt werden.

Durch das anmeldungsgemäße Ausbilden des größeren Bauraums 15b kann eine einzige Steuerplatine 30 verwendet werden, auf der Netzteil 31 und Steuervorrichtung 32 Platz finden. Die schmale längliche Ausgestaltung der Steuerplatine 30 erlaubt dabei eine sichere Trennung der Netzspannung, die im Bereich des Netzteiles 31 verarbeitet wird, und der Niederspannung, die der Steuervorrichtung 32 zugeführt wird.

Die Steuervorrichtung 32 umfasst Komponenten zur Ansteuerung der Antriebsmotoren 21. Derartige Komponenten können elektromagnetische Schaltorgane wie beispielsweise Relais sein, oder Halbleiterschalter, beispielsweise MOSFET (Metal-Oxide Semiconductor Field-Effect Transistor) Transistoren oder IGBT (Insulated Gate Bipolar Transistor) Transistoren sein. Die Schaltorgane weisen entweder mehrere Kontaktsätze auf oder sind in Form einer H-Brücke verschaltet, so dass die Drehrichtung der Antriebsmotoren 21 umgeschaltet werden kann.

Angesteuert werden die Schaltorgane abhängig von Eingangsinformationen der Steuerplatine 30, die beispielsweise von einer externen Fernbedienung, auch Handsteuerung genannt, zugeführt werden. Zu diesem Zweck sind im Bereich der Steuervorrichtung 32 von außen zugängliche Steueranschlüsse 321 ausgebildet. Weiterhin sind Bedien- und/oder Anzeigeelemente 322 vorgesehen, die beispielsweise eine Tastfunktion aufweisen können, um Funktionen der Steuervorrichtung 32 zurücksetzten zu können. Darüber hinaus können Beleuchtungseinrichtungen 323, z.B. in Form von Leuchtdioden, auf der Steuerplatine 30 angeordnet sein, die durch entsprechende Öffnungen oder Fenster in den Gehäusehalbschalen 11, 12 die Umgebung des elektromotorischen Möbelantriebs beleuchten. Auf diese Weise kann beispielsweise eine Unterbettbeleuchtung realisiert werden, die nach Betätigung einer entsprechenden Taste an der Fernbedienung für eine gewisse Zeit aktiv ist, so dass ein nächtliches Aufstehen erleichtert wird, ohne dass eine Zimmerbeleuchtung eingeschaltet werden muss.

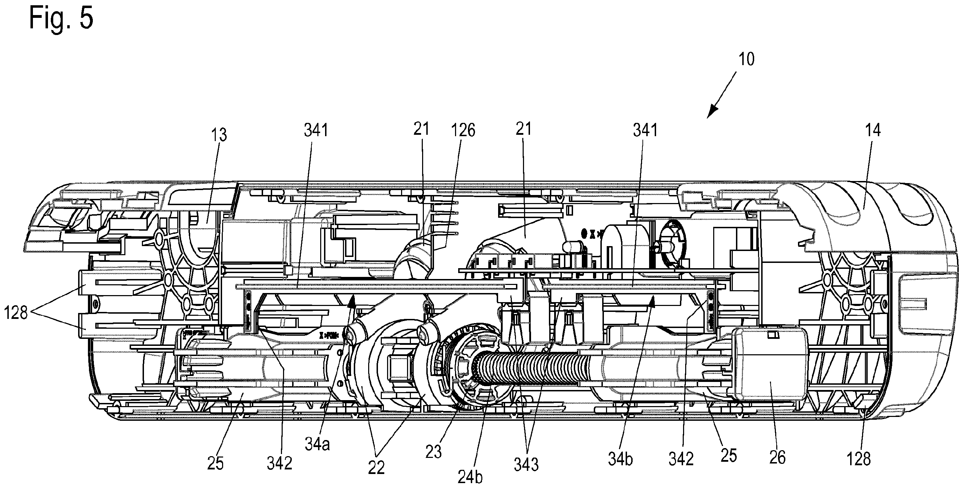

Weiterhin sind auf der Steuerplatine 30 Endschalter 33 angeordnet, die über eine Schleppstange 34 von den Druckschiebern 25 betätigt werden. Die Endschalter 33 verhindern eine Bewegung der Druckschieber 25 außerhalb eines zulässigen Bereichs, um beispielsweise einen mechanischen Anschlag des Druckschiebers 25 am Gehäuse 10 oder an dem Getriebe 22 bzw. der Bremse 23 bzw. verhindern einen Kontakt zwischen dem Ende der Spindel 24a, b und der Druckplatte 26 im Inneren des Druckschiebers 25. Die Anordnung der Endschalter 33 unmittelbar auf der Steuerplatine 30 verringert den Verdrahtungsaufwand, der bei Positionierung der Endschalter unmittelbar im Bereich der Druckschieber 25 andernfalls anfallen würde. Die Übertragung der Bewegung bzw. Position der Druckschieber 25 auf die Endschalter 33 über die Schleppstangen 34 wird nachfolgend in Zusammenhang mit den Figuren 5 bis 7 näher erläutert.

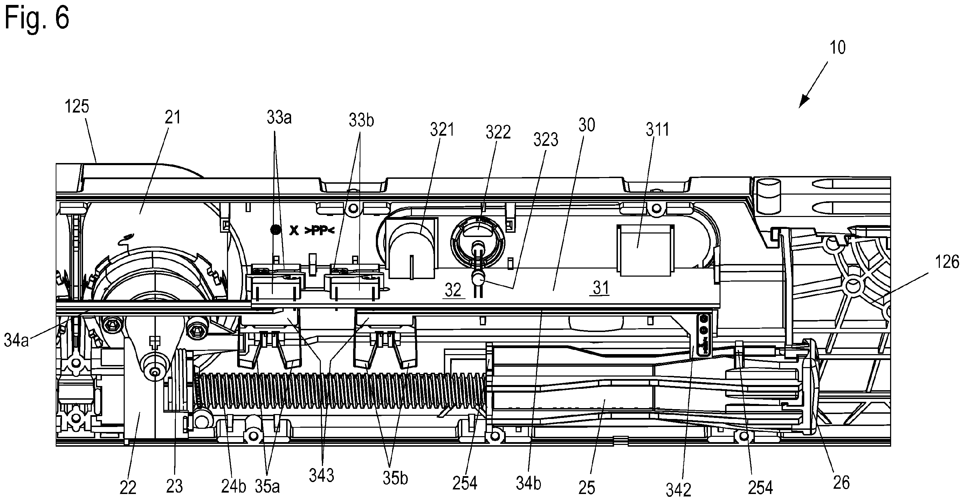

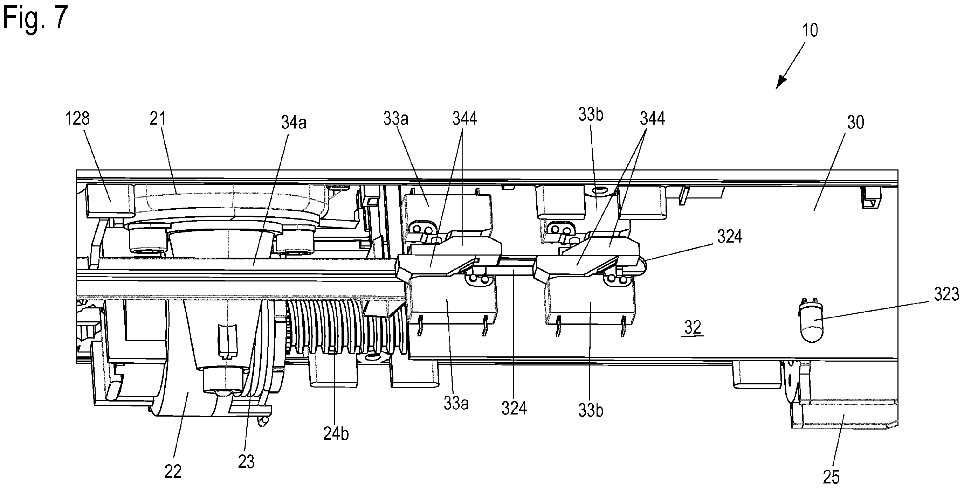

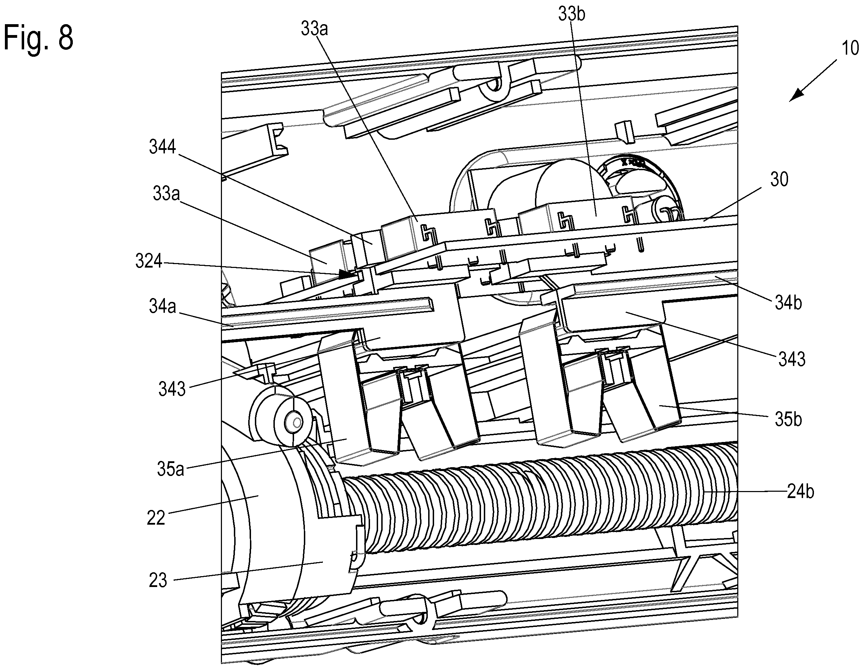

Figur 5 zeigt eine isometrische Schrägansicht des elektromotorischen Möbelantriebs aus einer seitlichen Schrägposition. Figur 6 zeigt in ebenfalls isometrischer Darstellung einen Ausschnitt des Möbelantriebs in Bereich der Steuerplatine 30 in einer leicht schräg von oben blickenden Seitenansicht. Die Figuren 7 und 8 sind Detailansichten des Möbelantriebs auf den Bereich der Steuervorrichtung 32 der Steuerplatine 30 mit Blick auf die Oberseite der Steuerplatine 30 in Figur 7 bzw. die Unterseite der Steuerplatine 30 in Figur 8.

In den Figuren 5 bis 8 ist wiederum wie bei den Figuren 3 bis 4 die erste Gehäusehalbschale 11 (vgl. Figur 1 und 2) entfernt.

Jeder der Antriebseinheiten 20 ist eine Schleppstange 34a bzw. 34b zugeordnet. Die Schleppstangen 34a, b sind im dargestellten Ausführungsbeispiel einstückig aus Kunststoff in einem Spritzgussverfahren hergestellt. Um trotz der Länge der Schleppstangen 34a, 34b eine ausreichende Druckstabilität zu erzielen und um eine verdrehsichere Führung innerhalb des Gehäuses 10 zu ermöglichen, sind die Schleppstangen 34a, 34b mit in Längsrichtung verlaufenden Führungsstegen 341 versehen. In den Gehäusehalbschalen 11, 12 sind Versteifungsrippen 126 im Bereich der Schleppstangen 34a, b so ausgebildet, dass sie eine Führung für die Schleppstangen 34a, b bilden, in denen die Schleppstangen 34a, 34b in ihrer Längsrichtung verschiebbar geführt sind. Die Schleppstangen 34a, b verlaufen im Wesentlichen parallel zu und oberhalb der Spindeln 24a, b. An jeweils einem ihrer Enden ist ein nach unten weisender Mitnehmer 342 ausgebildet, der bis in den Verschiebeweg der Druckschieber 25 hineinragt und von Querrippen 254, die an den Druckschiebern 25 ausgebildet sind, mitbewegt wird, wenn sich die Druckschieber 25 kurz vor dem einen oder dem anderen Ende ihres zulässigen Verschiebewegs befinden.

Am gegenüberliegenden Ende der jeweiligen Schleppstange 34a, b ist ein ebenfalls nach unten weisender Federnocken 343 ausgebildet. Im Bereich des Federnockens 343 ist am Gehäuse 10 eine Rückstellfeder 35a, b angeordnet, die aus einem w-förmig gebogenen Federblech besteht, das in einem mittleren Bereich am Gehäuse 10 festgelegt ist und mit seitlichen Federarmen an den Seitenkanten des Federnockens 343 anliegt. Zusätzlich ist ein Anschlag für die Federarme am Gehäuse 10 vorgesehen, der verhindert, dass sich jeder der Federarme zwar nach außen, nicht aber weiter nach innen bewegen kann als in der dargestellten Neutralstellung.

In der beispielsweise in Figur 6 gut erkennbaren Neutralstellung der Schleppstangen 34a, 34b ist der Federnocken 343 - je nach Ausbildung des Anschlags der für die Federarme am Gehäuse 10 - entweder nicht mit Federkraft beaufschlagt oder wird aus beiden Seiten gleichermaßen durch die Federarme der Rückstellfeder 35a, b mit Federkraft beaufschlagt, dass in Summe von der Rückstellfeder 35a, b keine in die eine oder andere Richtung der Schleppstange 34a, b wirkende Kraft ausgeübt wird.

Bei Bewegung der Schleppstange 34a, b in die eine oder andere Richtung wird von der Rückstellfeder 35a, b dann jeweils eine in Richtung der Neutralstellung wirkende Rückstellkraft durch jeweils einen der beiden Federarme auf den Federnocken 343 ausgeübt. Entsprechend nimmt die Schleppstange 34a, b durch die Rückstellfeder 35a, b die dargestellte Neutralstellung ein, wenn nicht der Mitnehmer 342 von einer der Querrippen 254 des Druckschiebers 25 in die eine oder andere Richtung ausgelenkt wird.

An der Oberseite der Schleppstangen 34a, b sind jeweils in dem Endbereich, in dem sich die Federnocken 343 befinden, Schaltnocken 344 ausgebildet. Der stangenförmige Abschnitt der Schleppstangen 34a, b sowie die Federnocken 343 sind dabei unterhalb der Steuerplatine 30 angeordnet, wohingegen die Schaltnocken 344 sich auf der Oberseite der Steuerplatine 30 befinden. Die Schleppstangen 34a, b weisen zu diesem Zweck einen nach oben weisenden Längssteg auf, von dem die Schaltnocken 344 seitlich abstehen. In der Steuerplatine 30 ist zur Durchführung des Längsstegs eine schlitzförmige Aussparung 324 eingebracht. Die schlitzförmige Aussparung 324 ist zu der in der Figur 7 links dargestellten Seite der Steuerplatine 30 nach außen offen. Bei Montage des Möbelantriebs können die Schleppstangen 34b, 34a in dieser Reihenfolge in die Schlitzförmige Aussparung 324 eingefädelt werden. Neben den im Gehäuse 10 ausgebildeten Führungen für die Schleppstangen 34a, b stellt auch die schlitzförmige Aussparung 324 im Zusammenhang mit den die Schaltnocken 344 tragenden Längsstegen eine Führung für die Schleppstangen 34a, b dar.

Auf der Oberseite der Steuerplatine 30 sind im Bereich der Schaltnocken 344 Endlagenschalter 33a bzw. b angeordnet, die von den Schaltnocken 344 betätigt werden. Für jede der Antriebseinheiten 20 sind zwei Endlagenschalter 33a bzw. 33b vorgesehen, wobei die Endlagenschalter 33a, b so angeordnet und die Schaltnocken 344 so ausgebildet und angeordnet sind, dass in der jeweiligen Neutralstellung der Schleppstangen 34a, b keiner der Endlagenschalter 33a, b betätigt ist. Wird die jeweilige Schleppstange 34a, b in eine der Richtungen ausgelenkt, wird jeweils einer der beiden Endlagenschalter 33a bzw. der beiden Endlagenschalter 33b betätigt.

In einer alternativen Ausgestaltung der Schleppstange 34a, b ist diese mehrteilig ausgebildet. Dabei besteht der stabförmige Abschnitt aus einem steifen Stab, beispielsweise geformt aus einem Drahtabschnitt. Ein erstes Ende des Drahtes ist mit einem Körper verbunden, welcher den zuvor beschriebenen Federnocken und die Schaltnocken aufweist. Das zweite Ende des Drahtes ist winkelförmig abgekantet und bildet den Mitnehmer. Weiter alternativ ist der zuvor genannte Mitnehmer mit dem zweiten Ende des Drahtes verbunden.

Auf der Steuerplatine 30 sind die Endlagenschalter 33a, b so mit den Schaltorganen zur Ansteuerung der Antriebsmotoren 21 verschaltet, dass ein Weiterbetreiben des jeweiligen Antriebsmotors 21 bei Erreichen einer der Endlagen verhindert ist, wohingegen ein Zurückfahren der Antriebsmotoren 21 möglich ist. Zu diesem Zweck kann beispielsweise jedem der Endlagenschalter 33a, b eine Diode zugeordnet sein, die parallel mit den Schaltkontakten des Endlagenschalters 33a, b verschaltet ist.

Der nicht von der Steuerplatine 30 belegte kleinere Bauraum 15a steht für weitere elektrische oder elektronische Komponenten zur Verfügung. Optional kann beispielsweise in dem Bauraum 15a ein Batteriefach angeordnet sein, in das von außen zugänglich Batterien eingelegt werden können, die bei einem Stromausfall den elektromotorischen Möbelantrieb zumindest zeitweise mit Strom versorgen können, um eine Notfahrt in eine gewünschte Grundstellung zu ermöglichen. Alternativ zu einem von außen zugänglichen Batteriefach können für die Notfahrt auch wieder aufladbare Batterien in Bauraum 15a vorgesehen sein, die von außen dann nicht zugänglich sein müssen und die über die Steuerplatine 30 mit Hilfe einer Ladekontrollschaltung in einen vollen Ladezustand gehalten werden.

Weiterhin können beispielsweise Empfangsmodule für eine drahtlose Fernbedienung oder weitere optionale Zusatzmodule, mit denen die Funktionalität der Steuervorrichtung 32 ergänzt wird, im Bauraum 15a untergebracht werden. Zusätzlich oder alternativ können auch Steckverbinder auf der Steuerplatine 30 vorgesehen sein, in die Ergänzungsplatinen senkrecht oder parallel zur Steuerplatine 30 eingesteckt werden können.

In Figur 5 ist zudem erkennbar, dass die Achsen der Antriebsmotoren 21 nicht parallel zu den Schwenkachsen verlaufen, sondern gegenüber diesen um etwa 20 bis 25 Grad in der yz-Ebene gekippt sind. Die Verkippung ist so gewählt, dass ein hinteres Ende des Motorgehäuses der Antriebsmotoren 21 nach oben nicht über die sonstige Bauhöhe des Möbelantriebs hinaus ragt. Dennoch wird durch die Verkippung eine Reduzierung der Breite des Möbelantriebs in z-Richtung erreicht. Die Motordome 125 stehen auf diese Weise weniger weit über die Seitenfläche 123 über, als es bei Ausrichtung der Motorachse entlang der z-Richtung wäre.

In Figur 8 ist eine Detailzeichnung des Druckschiebers 25 sowie des Druckkopfes 26 in isometrischer Ansicht wiedergegeben. Der Druckkopf 26 ist in dieser Figur separat vom Druckschieber 25 dargestellt.

Der Druckschieber 25 ist bevorzugt ein- oder mehrstückiges Kunststoffbauteil, das aus einem hoch belastbaren und bruchfesten Kunststoff hergestellt ist, beispielsweise aus POM (Polyoxymethylen). Vorliegend ist der Druckschieber 25 aus zwei Elementen zusammengesetzt, einem hohlen Grundkörper 251 und einem Spindelmuttereinsatz 253. An dem Grundkörper 251 sind in Längsrichtung nach außen abstehende Führungsstege 252 ausgebildet, die zusätzlich auch der Versteifung des Grundkörpers 251 dienen.

In einen Endbereich des Grundkörpers 251 ist der Spindelmuttereinsatz 253 eingesetzt. Zentral ist im Spindelmuttereinsatz 253 ein Gewindeabschnitt ausgebildet, der als Spindelmutter für die Spindel 24a, b dient. Der Gewindeabschnitt ragt in das Innere des Grundkörpers 251 hinein. An der in Figur 8 sichtbaren Außenseite ragt der Spindelmuttereinsatz 253 plattenförmig über die Öffnung im Grundkörper 251 hinaus und liegt an seiner Stirnfläche auf. Auf diese Weise können große Kräfte von dem Spindelmuttereinsatz 253 auf den Grundkörper 251 übertragen werden. In einer alternativen Ausgestaltung des Druckschiebers 25 ist dieser einstückig. Der Grundkörper 251 und der Spindelmuttereinsatz 253 sind dann in einem Element integriert. Die Platte des Spindelmuttereinsatz 253 stellt zudem eine über den Grundkörpers 251 nach außen hervorstehende Querrippe 254, die als Anschlag für den Mitnehmer 342 der Schleppstange 34a, b dient. Eine weitere Querrippe 254 ist zu diesem Zweck an der gegenüberliegenden Seite des Grundkörpers 251 ausgebildet.

Die Grundform des Grundkörpers 251 variiert entlang seiner Längserstreckung von einem Hohlzylinder auf der Seite des Spindelmuttereinsatzes 253 zu einem Hohlkegel auf der gegenüberliegenden Ende des Grundkörpers 251. Der Übergang zwischen beiden Grundformen findet etwa in der Mitte des Grundkörpers 251 statt. Zu dem dem Spindelmuttereinsatz 253 gegenüberliegenden Ende hin weitet sich der Durchmesser des Grundkörpers 251 auf.

In die aufgeweitete Öffnung des Grundkörpers 251 wird der Druckkopf 26 eingesetzt. Dieser weist eine Druckplatte 261 mit einer nach außen weisenden Druckfläche 262 auf, an der der Schwenkhebel der Schwenkachse des Möbels anliegt. An der gegenüberliegenden Seite der Druckplatte 261 ist ein Stutzen 264 ausgebildet, der in die Öffnung des Grundkörpers 251 des Druckschiebers 25 hinein ragt. Die Druckplatte 261 ragt außen über den Stutzen 264 hinaus, so dass eine Auflagefläche 263 gebildet ist, mit der der Druckkopf 26 an einer stirnseitigen Auflagefläche 255 des Druckschiebers 25 aufliegt. Druckkopf 26 und Druckschieber 25 verrasten miteinander, wobei im vorliegenden Beispiel am Druckkopf 26 Rasthaken 265 ausgebildet sind, die in Rastführungen 256 eingesetzt werden, und jeweils an hinterschnittenen Rastvorsprüngen 257 einrasten.

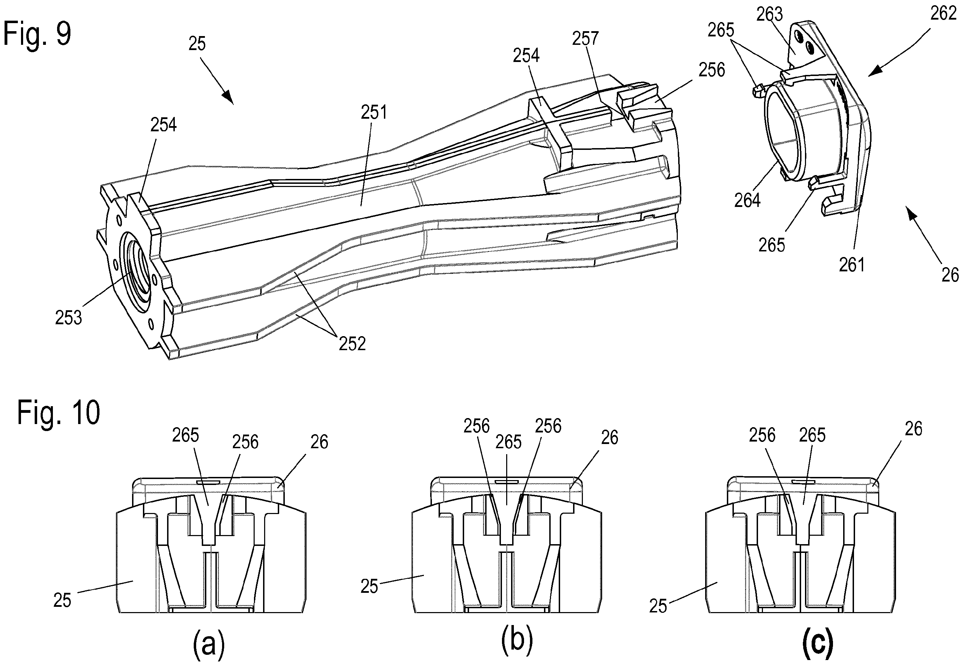

Geometrie und Abmessungen des Stutzens 264 sind so gewählt, dass der Druckkopf 26 in z-Richtung seitlich gegenüber dem Druckschieber 25 verschoben werden kann. Beim Verschieben führt der Druckkopf 26 keine Linearbewegung aus, sondern eine Schwenkbewegung. Diese wird durch entsprechende Formgebung der Auflagefläche 255 des Grundkörpers 251 einerseits und der Auflagefläche 263 des Druckkopfes 26 andererseits erreicht. Die Auflagefläche 255 des Druckschiebers 25 ist dabei in z-Richtung konkav, wohingegen die Auflagefläche 263 des Druckkopfs 26 in z-Richtung konvex geformt ist. Die Schwenkbewegung ermöglicht einen Winkelausgleich, falls ein Schwenkhebel mit seiner Auflagefläche nicht exakt entlang der z-Richtung ausgerichtet ist. Die mögliche Winkelbewegung ist in Figur 10 in einer Draufsicht auf den Endbereich des Druckschiebers 25 mit aufgesetztem Druckkopf 26 in drei Teilfiguren dargestellt. In der mittleren Teilfigur (b) der Figur 10 befindet sich der Druckkopf 26 in einer Mittelposition relativ zum Druckschieber 25. Um eine Bewegung des Druckkopfs 26 zu ermöglichen, ist die Rasthakenführung 256 etwas breiter ausgebildet als die Breite des Rasthakens 265 selbst. In der Teilfigur (b) befindet sich der Rasthaken 265 mittig in der Rasthakenführung 256. Die linke Teilfigur (a) zeigt die Druckplatte 26 vom Druckschieber 25 aus gesehen nach links ausgelenkt und verschwenkt. Die Teilfigur (c) zeigt die Druckplatte 26 vom Druckschieber 25 aus gesehen nach rechts verschwenkt. Der Spielraum, den der Rasthaken 265 in der Rasthakenführung 256 hat ist dabei an den Spielraum des Stutzens 264 in der Öffnung des Grundkörpers 251 angepasst, derart, dass ein Anschlag für den Druckkopf 26 bevorzugt durch Anliegen des Stutzens 254 an der Wandung des Grundkörpers 251 gebildet ist, da dieser Anschlag größere Kräfte aufnehmen kann als der Rasthaken 265.

Wie insbesondere in Figur 5 gut zu erkennen ist, kann auch die Druckfläche 262 des Druckkopfes 26 nicht eben ausgebildet sein. Vorliegend ist die Druckfläche 262 im oberen Bereich leicht abgeschrägt, um ein Anschlagen dieses Abschnittes der Druckfläche 262 an der Schwenkachse oder dem Schwenkhebel zu unterbinden.

Aus der Verlängerung der Spindel 24b gegen über der Spindel 24a und der entsprechend geänderten Anordnung der Antriebsmotoren 21 und Getriebe 22 zueinander ergibt sich zudem ein Vorteil bei der Verpackung mehrerer der dargestellten elektromotorischen Möbelantriebe gegenüber dem Stand der Technik. Durch die Verlängerung der Spindel 24b gegenüber der Spindel 24a sind die Antriebsmotoren 21 nah beieinander positioniert, so dass an der zweiten Gehäusehalbschale 12 ein einzelner Motordom 125 ausgebildet sein kann, der beide Gehäuse der Antriebsmotoren 21 umfasst. Dieser Motordom 125 ist zudem nicht mittig an der Längsseite des Gehäuses 10 angeordnet, sondern außermittig. Die außermittige Anordnung erlaubt es, zwei Möbelantriebe mit jeweils aufeinander zuweisenden zweiten Gehäusehalbschalen 12 innerhalb einer Verpackungseinheit zu positionieren, wobei nur eine geringe oder je nach Geometrie gar keine Verschiebung der Möbelantriebe zueinander in Längsrichtung erfolgen muss.

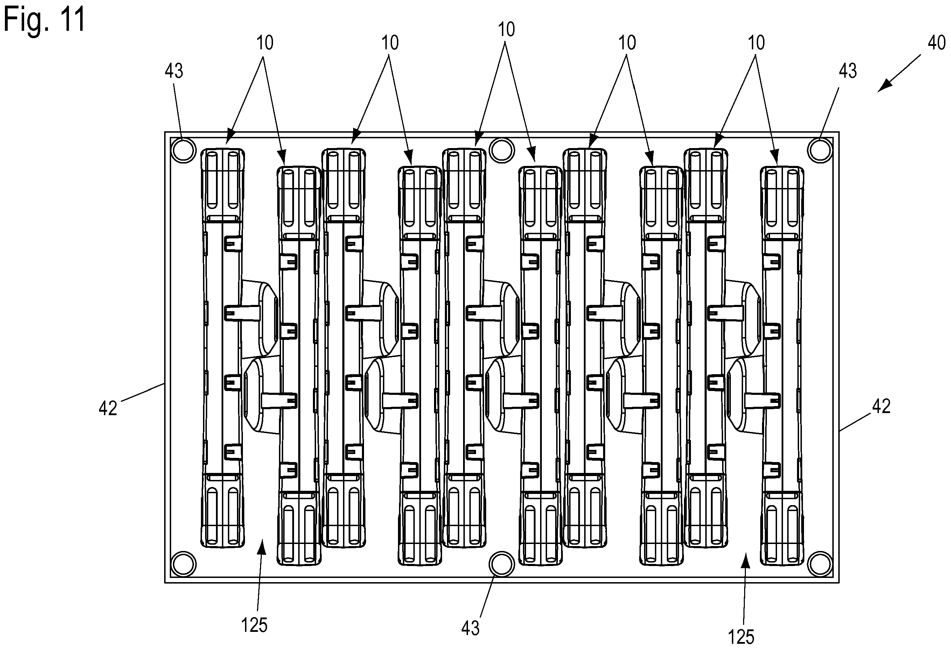

Dieses ist in der Figur 11 beispielhaft für zehn paarweise in einer Lage einer Verpackungseinheit 40 angeordneten Möbelantrieben dargestellt. Durch die außermittige Anordnung der Motordome 125 am Gehäuse 10 der Möbelantriebe können diese paarweise ineinander verschränkt angeordnet werden, ohne dass sie in Längsrichtung nennenswert gegeneinander verschoben werden müssen. Auf diese Weise wird der zur Verfügung stehende Stauraum in der Verpackungseinheit 40 optimal ausgenutzt. Im dargestellten Beispiel basiert die Verpackungseinheit 40 auf einer Europalette 41, auf die ein Karton 42 aufgestellt ist. Im Karton 42 können mehrere der dargestellten Lagen von Möbelantrieben übereinander verpackt werden. Um ggf. zwei oder mehr Verpackungseinheiten 40 aufeinander stapeln zu können, sind im Inneren des Kartons 42 vertikale Stützrollen 43 verteilt angeordnet, die beispielsweise wie der Karton 42 aus Pappmaterial bestehen können.

### Bezugszeichenliste

- 10: Gehäuse

- 11: erste Gehäusehalbschale
- 111: Klammermulde
- 112: Schraubloch
- 113: Seitenfläche
- 114: Anschlussmulde

- 12: zweite Gehäusehalbschale
- 121: Klammermulde
- 122: Schraubdom
- 123: Seitenfläche
- 124: Anschlussmulde
- 125: Motordom
- 126: Versteifungsrippe
- 127: Stoßfläche
- 128: Zentrierlasche

- 13: Achsaufnahme für Schwenkachse des Möbels

- 14: Schieber

- 15a,b: Bauraum

- 20: Antriebseinheit
- 21: Antriebsmotor
- 22: Getriebe
- 23: Bremse
- 24a, b: Spindel

- 25: Druckschieber
- 251: Grundkörper
- 252: Führungssteg
- 253: Spindelmuttereinsatz
- 254: Querrippe (Anschlag für Mitnehmer)
- 255: konvexe Auflagefläche
- 256: Rasthakenführung
- 257: Rastvorsprung
- 26: Druckkopf
- 261: Druckplatte
- 262: Druckfläche
- 263: konkave Auflagefläche
- 264: Stutzen
- 265: Rasthaken

- 30: Steuerplatinen

- 31: Netzteil
- 311: Netzanschluss

- 32: Steuervorrichtung
- 321: Steueranschluss
- 322: Bedien- bzw. Anzeigeelement
- 323: Beleuchtungselement
- 324: Aussparung

- 33a, b: Endlagenschalter

- 34a, b: Schleppstange
- 341: Führungssteg
- 342: Mitnehmer
- 343: Federnocken
- 344: Schaltnocken

- 35a, b: Rückstellfeder

- 40: Verpackungseinheit
- 41: Europalette
- 42: Karton
- 43: Stützrolle

## Patentansprüche

1. Elektromotorischer Doppelantrieb zur Verstellung von zwei verschiedenen Möbelteilen eines Möbels mit zwei Antriebseinheiten (20), von denen jede einen Antriebsmotor (21), ein Getriebe (22) und einen auf ein Abtriebsglied wirkenden Spindelantrieb mit jeweils einer Spindel (24a, 24b) aufweist, wobei beide Antriebseinheiten (20) in Längsrichtung hintereinanderliegend in einem gemeinsamen Gehäuse (10) angeordnet sind und wobei an sich in Längsrichtung gegenüberliegenden Endabschnitten des Gehäuses (10) Achsaufnahmen (13) für jeweils eine Schwenkachse des Möbels, auf die jeweils ein Abtriebsglied wirkt, ausgebildet sind, **dadurch gekennzeichnet, dass**
die Spindeln (24a, 24b) und/oder die Abtriebsglieder der beiden Antriebseinheiten (20) unterschiedlich lang ausgebildet sind und die Antriebsmotoren (21) unterschiedlich weit von der ihnen zugeordneten Achsaufnahme (13) für die jeweilige Schwenkachse beabstandet sind.

2. Elektromotorischer Doppelantrieb nach Anspruch 1, bei dem beide Antriebseinheiten (20) mit ihren Antriebsmotoren (21) benachbart und mit geringem Abstand zueinander angeordnet sind.

3. Elektromotorischer Doppelantrieb nach Anspruch 2, bei dem zwischen den Antriebseinheiten (20) nur Versteifungsrippen (126) des Gehäuses (10) angeordnet sind.

4. Elektromotorischer Doppelantrieb nach Anspruch 2 oder 3, bei dem ein gemeinsamer Motordom (125) am Gehäuse (10) ausgebildet ist, der über eine Seitenfläche (123) des Gehäuses (10) hinausragende Abschnitte beider Antriebsmotoren (21) abdeckt.

5. Elektromotorischer Doppelantrieb nach Anspruch 4, bei dem Antriebswellen der Antriebsmotoren (21) gegenüber der Seitenfläche (123) des Gehäuses (10) schräg verlaufen.

6. Elektromotorischer Doppelantrieb nach einem der Ansprüche 1 bis 5, bei dem benachbart zu den Spindeln (24a, 24b) ein erster und ein zweiter Bauraum (15a, 15b) ausgebildet ist, wobei der zweite Bauraum (15b) größer als der erste Bauraum (15a) ist.

7. Elektromotorischer Doppelantrieb nach Anspruch 6, bei dem in dem zweiten, größeren Bauraum (15b) eine Steuerplatine (30) angeordnet ist.

8. Elektromotorischer Doppelantrieb nach Anspruch 7, bei dem auf der Steuerplatine (30) ein Netzteil (31) und eine Steuervorrichtung (32) für die Antriebsmotoren (21) angeordnet sind.

9. Elektromotorischer Doppelantrieb nach Anspruch 7 oder 8, bei dem auf der Steuerplatine (30) Endlagenschalter (33a, 33b) zur Abschaltung der Antriebsmotoren (21) bei Annäherung der Abtriebsglieder an Grenzen ihres Verschiebewegs angeordnet sind, wobei die Abtriebsglieder über Schleppstangen (34a, 34b) mit den Endschaltern (33a, 33b) gekoppelt sind.

10. Elektromotorischer Doppelantrieb nach Anspruch 9, bei dem die Abtriebsglieder zwischen einer vollständig eingefahrenen und einer vollständig ausgefahrenen Stellung linear verschiebbar sind, und die bei Annäherung an die vollständig eingefahrene bzw. die vollständig ausgefahrene Stellung die zugeordnete Schleppstange (34a, 34b) aus einer Neutralstellung heraus in eine oder eine entgegengesetzte Richtung auslenken.

11. Elektromotorischer Doppelantrieb nach Anspruch 10, bei dem die Schleppstangen (34a, 34b) jeweils einen Mitnehmer (342) aufweisen, der von Anschlägen an dem Abtriebsglied mitbewegt wird.

12. Elektromotorischer Doppelantrieb nach Anspruch 10 oder 11, bei dem die Abtriebsglieder Druckschieber (25) mit einem Druckkopf (26) sind, wobei in dem Druckschieber (25) eine Spindelmutter eingesetzt oder ausgebildet ist.

13. Elektromotorischer Doppelantrieb nach einem der Ansprüche 10 bis 12, bei dem jeder Schleppstange (34a, 34b) eine Rückstellfeder (35a, 35b) zugeordnet ist, die sie bei Auslenkung in jeder Richtung in die Neutralstellung zurückbewegt.

14. Elektromotorischer Doppelantrieb nach Anspruch 13, bei dem die Rückstellfeder (35a, 35b) eine w-förmige Feder mit zwei Federarmen ist, die in einem mittleren Bereich am Gehäuse (10) festgelegt ist.

15. Elektromotorischer Doppelantrieb nach einem der Ansprüche 9 bis 14, bei dem jede der Schleppstangen (34a, 34b) Schaltnocken (344) aufweist, um die Endlagenschalter (33a, 33b) bei Auslenkung zu betätigen.

16. Elektromotorischer Doppelantrieb nach einem der Ansprüche 9 bis 15, bei dem die Schleppstangen (34a, 34b) von Elementen des Gehäuses (10) und/oder von der Steuerplatine (30) linear verschiebbar geführt sind.

17. Elektromotorischer Doppelantrieb nach einem der Ansprüche 15 oder 16, bei dem die Steuerplatine (30) eine schlitzartige Ausnehmung (324) aufweist, in der die Schleppstangen (34a, 34b) geführt sind, wobei die Schaltnocken (344) auf einer Seite der Steuerplatine (30) und die sonstigen Abschnitte der Schleppstangen (34a, 34b) auf der gegenüberliegenden Seite der Steuerplatine (30) angeordnet sind.

## Claims

1. An electromotive dual drive for an adjustment of two different furniture parts of a piece of furniture having two drive units (20), each of which comprises a drive motor (21), a transmission (22) and a spindle drive having a respective spindle (24a, 24b) acting on an output member, wherein the two drive units (20) are arranged one behind the other in a common housing (10) in the longitudinal direction, and wherein shaft holders (13) for a respective pivot shaft of the furniture, on which a respective output member acts, are formed on end sections of the housing (10) which are mutually opposite in the longitudinal direction, **characterized in that** the spindles (24a, 24b) and/or the output members of the two drive units (20) are designed with different lengths and the drive motors (21) are differently spaced apart from the shaft holders (13) assigned thereto for the respective pivot shaft.

2. An electromotive dual drive according to claim 1, wherein both drive units (20) are arranged with their drive motors (21) adjacent to each other and at a small distance from each other.

3. An electromotive dual drive according to claim 2, wherein only stiffening ribs (126) of the housing (10) are arranged between the drive units (20).

4. An electromotive dual drive according to claim 2 or 3, wherein a common motor dome (125) is formed on the housing (10), which covers sections of the two drive motors (21) projecting beyond a side face (123) of the housing (10).

5. An electromotive dual drive according to claim 4, wherein drive shafts of the drive motors (21) extend obliquely in relation to the side face (123) of the housing (10).

6. An electromotive dual drive according to one of claims 1 to 5, wherein a first and a second installation space (15a, 15b) is formed adjacent to the spindles (24a, 24b), wherein the second installation space (15b) is larger than the first installation space (15a).

7. An electromotive dual drive according to claim 6, wherein a control board (30) is arranged in the second, larger installation space (15b).

8. An electromotive dual drive according to claim 7, wherein a power supply unit (31) and a control device (32) for the drive motors (21) are arranged on the control board (30).

9. An electromotive dual drive according to claim 7 or 8, wherein end position switches (33a, 33b) are arranged on the control board (30) for switching off the drive motors (21) when the output members approach the limits of their displacement path, wherein the output members are coupled via tow rods (34a, 34b) to the limit switches (33a, 33b).

10. An electromotive dual drive according to claim 9, wherein the output members are linearly displaceable between a fully retracted position and a fully extended position, and which, when approaching the fully retracted position or the fully extended position, deflect the associated tow bar (34a, 34b) out of a neutral position into one direction or an opposite direction.

11. An electromotive dual drive according to claim 10, wherein the tow rods (34a, 34b) each have a driver (342) which is co-moved by stops on the output member.

12. An electromotive dual drive according to claim 10 or 11, wherein the output members are pressure slides (25) with a pressure head (26), wherein a spindle nut is inserted into or formed in the pressure slide (25).

13. An electromotive dual drive according to one of claims 10 to 12, wherein a restoring spring (35a, 35b) is assigned to each tow rod (34a, 34b), which returns it back into the neutral position when deflected in each direction.

14. An electromotive dual drive according to claim 13, wherein the restoring spring (35a, 35b) is a W-shaped spring with two spring arms which is fixed in a central region to the housing (10).

15. An electromotive dual drive according to one of claims 9 to 14, wherein each of the tow rods (34a, 34b) has switching cams (344) for actuating the end position switches (33a, 33b) upon deflection.

16. An electromotive dual drive according to one of claims 9 to 15, wherein the tow rods (34a, 34b) are guided in a linearly displaceable manner by elements of the housing (10) and/or by the control board (30).

17. An electromotive dual drive according to one of the claims 15 or 16, wherein the control board (30) has a slot-like recess (324) in which the tow rods (34a, 34b) are guided, wherein the switching cams (344) are arranged on one side of the control board (30) and the other sections of the tow rods (34a, 34b) are arranged on the opposite side of the control board (30).

## Revendications

1. Double entraînement à moteur électrique de meuble pour le déplacement de deux parties différentes d'un meuble avec deux unités d'entraînement (20) dont chacune comprend un moteur d'entraînement (21), un engrenage (22) et un entraînement à broche avec une broche (24a, 24b) agissant sur un élément de sortie, les deux unités d'entraînement (20) étant disposées l'une derrière l'autre dans un boîtier (10) commun et des logements d'axe (13) étant formés dans des parties d'extrémité du boîtier (10) opposées dans le sens longitudinal pour des axes de pivotement du meuble, avec un élément de sortie agissant sur chacun de ceux-ci, **caractérisé en ce que** les broches (24a, 24b) et/ou les éléments de sortie des deux unités d'entraînement (20) sont de longueur différente et les moteurs d'entraînement (21) sont disposés à une distance différente du logement d'axe (13) qui leur correspond pour l'axe de pivotement correspondant.

2. Double entraînement à moteur électrique selon la revendication 1, dans lequel les deux unités d'entraînement (20) avec leurs moteurs d'entraînement (21) sont disposées au voisinage et à faible distance l'une de l'autre.

3. Double entraînement à moteur électrique selon la revendication 2, dans lequel seules des nervures raidisseuses (126) du boîtier (10) sont disposées entre les unités d'entraînement (20).

4. Double entraînement à moteur électrique selon la revendication 2 ou 3, dans lequel un dôme de moteur (125) commun est formé sur le boîtier (10) et couvre les parties des deux moteurs d'entraînement (21) qui dépassent au-delà d'une surface latérale (123) du boîtier (10).

5. Double entraînement à moteur électrique selon la revendication 4, dans lequel les arbres d'entraînement des moteurs d'entraînement (21) sont obliques par rapport à la surface latérale (123) du boîtier (10).

6. Double entraînement à moteur électrique selon l'une des revendications 1 à 5, dans lequel sont formés au voisinage des broches (24a, 24b) un premier espace de construction et un deuxième (15a, 15b), le deuxième espace de construction (15b) étant plus grand que le premier espace de construction (15a).

7. Double entraînement à moteur électrique selon la revendication 6, dans lequel une platine de commande (30) est disposée dans le deuxième et plus grand espace de construction (15b).

8. Double entraînement à moteur électrique de meuble selon la revendication 7, dans lequel un bloc secteur (31) et un dispositif de commande (32) pour les moteurs d'entraînement (21) sont disposés sur la platine de commande (30).

9. Double entraînement à moteur électrique selon la revendication 7 ou 8, dans lequel sont prévus sur la platine de commande (30) des contacts de fin de course (33a, 33b) pour arrêter les moteurs d'entraînement (21) quand les éléments de sortie approchent des limites de leur course de translation, les éléments de sortie étant couplés aux contacts de fin de course (33a, 33b) par des tringles de traction (34a, 34b).

10. Double entraînement à moteur électrique selon la revendication 9, dans lequel les éléments de sortie sont capables de translation linéaire entre une position complètement rentrée et une position complètement sortie et dévient la tringle de traction (34a, 34b) qui leur est associée dans une direction ou la direction opposée à partir d'une position neutre en approchant de la position complètement rentrée ou de la position complètement sortie.

11. Double entraînement à moteur électrique selon la revendication 10, dans lequel les tringles de traction (34a, 34b) présentent chacune un entraîneur (342) qui est déplacé par des butées de l'élément de sortie.

12. Double entraînement à moteur électrique selon la revendication 10 ou 11, dans lequel les éléments de sortie sont des coulisses de poussée (25) avec une tête de poussée (26) et un écrou de broche est inséré ou formé dans les coulisses de poussée (25).

13. Double entraînement à moteur électrique selon l'une des revendications 10 à 12, dans lequel chaque tringle de traction (34a, 34b) est associée à un ressort de rappel (35a, 35b) qui la ramène dans la position neutre lors de sa déviation dans chaque direction.

14. Double entraînement à moteur électrique de meuble selon la revendication 13, dans lequel le ressort de rappel (35a, 35b) est un ressort en forme de w avec deux bras de ressort, qui est fixé au boîtier (10) dans une partie centrale.

15. Double entraînement à moteur électrique selon l'une des revendications 9 à 14, dans lequel chacune des tringles de traction (34a, 34b) présente des cames de commutation (344) pour actionner les contacts de fin de course (33a, 33b) lors de sa déviation.

16. Double entraînement à moteur électrique selon l'une des revendications 9 à 15, dans lequel les tringles de traction (34a, 34b) sont guidées en translation linéaire par des éléments du boîtier (10) et/ou de la platine de commande (30).

17. Double entraînement à moteur électrique selon l'une des revendications 15 ou 16, dans lequel la platine de commande (30) présente un évidement en forme de fente (324) dans lequel les tringles de traction (34a, 34b) sont guidées, les cames de commutation (344) étant disposées sur un côté de la platine de commande (30) et les autres parties des tringles de traction (34a, 34b) sur le côté opposé de la platine de commande (30).
